# EUROPÄISCHE PATENTANMELDUNG

(11) **EP 2 444 223 A1**
(43) Veröffentlichungstag der Anmeldung: **25.04.2012**
(21) Anmeldenummer: 10013765.2
(22) Anmeldetag: 19.10.2010
(51) Int. Cl.: B29C 45/40

(54) **Elektrisch betriebene Bewegungseinheit für Spritzguss- oder Druckgusswerkzeuge**

(71) Anmelder: ifw Manfred Otte GmbH, 4563 Micheldorf (AT)
(72) Erfinder: Kastner, Friedrich, 4710 Grieskirchen (AT)
(74) Vertreter: Ofner, Clemens

(57) **Zusammenfassung**

Die Erfindung betrifft eine Bewegungseinheit für Spritzguss- oder Druckwerkzeuge, insbesondere geeignet zum Entformen von komplexen Bereichen von Spritzgussteilen, dadurch gekennzeichnet, dass der Antrieb des Kernzugs durch zwei oder mehrere elektrische Motoren erfolgt, wobei sowohl Anfahrmoment als auch Anfahrtsgeschwindigkeit und Rotations- sowie Linearbewegungen getrennt steuerbar sind.

## Beschreibung

Die Erfindung betrifft eine elektrisch betriebene Bewegungseinheit, z.B. einen Kernzug, für Spritzguss- oder Druckgusswerkzeuge, insbesondere zur Entformung von komplexen Spritzgussteilen, die z.B. Hinterschnitte, Gewinde und dergleichen beinhalten.

Nach dem derzeitigen Stand der Technik werden komplexe Spritzguss- oder Druckgussteile z.B. mit Innengenwinde mit Hilfe eines Leitgewindes entformt. Die Drehbewegung des Kernes wird entweder mechanisch durch die Öffnungsbewegung des Spitzgusswerkzeuges oder durch separate hydraulische Antriebe realisiert. Das Leitgewinde dient der korrekten Übersetzung, damit der Entformungshub pro Umdrehung der Steigung des zu entformenden Gewindes entspricht.

Bei einem mechanischen Antrieb ist nur eine eingeschränkte Geschwindigkeit der Kernbewegung möglich, es muss eine Umlenkung der Kräfte erfolgen, die schwer dosierbar ist. Zudem tritt dadurch hoher Verschleiß auf.

Bei einem hydraulischen Antrieb ist ein zusätzliches Aggregat am Spritzguss- bzw. Druckgusswerkzeug oder an der Maschine erforderlich.

Sowohl beim mechanischen als auch beim hydraulischen Kernzug kann für Gewinde nur eine Steigung realisiert werden, für andere Gewindesteigungen ist ein mechanischer Umbau notwendig.

Aufgabe der Erfindung war es, eine Bewegungseinheit für Spritzguss- oder Druckgusswerkzeuge bereitzustellen, die insbesondere für die Entformung komplexer Bereiche von Spritzguss- oder Druckgussteilen geeignet ist und die Nachteile des Standes der Technik nicht aufweist. Insbesondere soll eine beliebige Kombination von Dreh- und Linearbewegungen möglich sein.

Gegenstand der Erfindung ist daher eine Bewegungseinheit für Spritzguss-oder Druckgusswerkzeuge, insbesondere geeignet zum Entformen von komplexen Bereichen von Spritzguss- oder Druckgussteilen, dadurch gekennzeichnet, dass der Antrieb der Bewegungseinheit durch zwei oder mehrere elektrische Motoren erfolgt, wobei sowohl Anfahrmoment als auch Anfahrtsgeschwindigkeit und Rotations- sowie Linearbewegungen getrennt steuerbar sind.

Vorteilhafterweise wird für jede Bewegungsart der Bewegungseinheit ein eigener Motor vorgesehen. Besonders vorteilhaft werden als Antriebe AC-Servomotoren eingesetzt.

Die Steuerung erfolgt durch eine Kontrolleinheit, die entweder in der Spritz-oder Druckgussmaschine integriert oder als separate Kontrolleinheit ausgeführt ist.

Über diese Kontrolleinheit können die Motoren getrennt oder gleichzeitig gesteuert werden und zusätzlich ist der Steuerungsablauf hinterlegt.

Durch die Trennung der Linear- und der Rotationsbewegung können je nach Anforderung diese Bewegungen z.B. abwechselnd, nacheinander, gleichzeitig, gestuft oder kombiniert durchgeführt werden. Dadurch kann das bewegliche Werkzeugelement, z.B. ein Kern, sehr präzise gesteuert und positioniert werden.

Es werden keine hydraulischen oder mechanischen Einheiten für die Steuerung der Bewegung benötigt, wodurch die bekannten beschriebenen Nachteile der bisher bekannten Steuerungen vermieden werden.

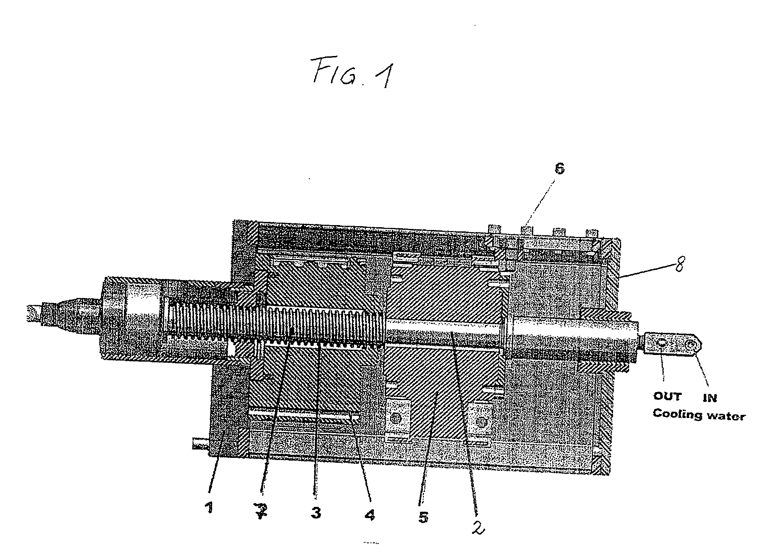

In Figur 1 ist ein erfindungsgemäßer Aufbau der Bewegungseinheit dargestellt.

In Figur 1 bedeuten
1 die erste Stirnplatte
2 die Achse
3 ein Werkzeugelement, durch dessen Rotation die Achse 2 linear bewegt wird, z.B. eine Mutter
4 ein erstes Getriebe
5 ein zweites Getriebe
6 Stift, Anschlagelement oder dergleichen
7 Bewegungsgewinde
8 zweite Stirnplatte

Die Bewegungseinheit weist eine Achse 2 auf, dessen axiale und rotierende Bewegung entweder getrennt oder gleichzeitig gesteuert werden können.

Die Achse weist ein Element 3 wie z.B. eine Mutter auf, die in das Bewegungsgewinde 7 der Achse 2 eingreift. Das Bewegungsgewinde kann beispielsweise ein Trapezgewinde sein.

Die Achse 2 ist vorzugsweise hohl geformt und/oder weist eine Kühlvorrichtung wie Kühlelemente, Kühlbohrungen, Wärmeleitstifte, Zuführung für verdampfende Flüssigkeiten oder dergleichen auf.

Die Achse 2 kann einteilig gefertigt sein, aber auch mehrteilig. Die Achse 2 kann als profilierte Welle beispielsweise als Keilwelle ausgeführt sein, an die das Bewegungsgewinde 7 und das verbindende Element des Getriebes 5 über eine form- und/oder kraftschlüssige Verbindung fixiert sind.

Eine weitere Variante ist folgende: der Bereich des Gewindes 7 kann hohl gefertigt und gegen Verdrehen fixiert sein, sodass die Achse 2 innen frei drehbar geführt ist. Drehbewegungen erfolgen durch Getriebe 5. Die Linearbewegung ist unabhängig vom Getriebe 5, erfolgt nur durch Getriebe 4 und wird über einen Kraft- und/oder Formschluss, z.B. einen Flansch, einen Anschlag, einen Mitnehmer und dgl. auf die innenliegende drehbare Achse 2 übertragen.

Vorzugsweise ist die Achse aus geeigneten Stahlsorten gefertigt, beispielsweise C40, C45, 1.4301, 35SMnPb10, 42CrMo4.

Ein erstes Getriebe 4 ist durch Schrauben an der Stirnplatte 1 des Gehäuses der Bewegungseinheit oder am Gehäuse selbst fixiert und bewirkt, sobald das Element 3, beispielsweise eine Mutter, in Rotationsbewegung versetzt wird, eine lineare Bewegung der Achse 2.

Die Rotationsbewegung des Getriebes 4 kann auch mittels Riemen, Keil- oder Zahnriemen, Ketten, Zahnstangen oder ähnlichen Maschinenelementen übertragen werden und so die lineare Bewegung der Achse 2 bewirken.

Das verbindende Element des Getriebes 5 ist mittels Kraft- und/oder Formschluss an der Achse 2 montiert. Das Getriebe 5 ist durch geeignete Elemente 6 an mindestens einer Seite, vorzugsweise der Frontseite des Gehäuses, beispielsweise durch einen Stift, fixiert, so dass eine Rotation des Getriebes 5 verhindert wird und nur eine lineare Bewegung für das Getriebegehäuse zulassen wird. Das Getriebe 5 kann auch mittels eines Anschlagelementes, Stiftes oder dergleichen, oder durch Führungselemente wie z.B. Rollen, Lager, Schienen, Schwalbenschwanznut oder dergleichen im Gehäuse oder in der Gehäusewandung fixiert und geführt sein.

Die Rotationsbewegung des Getriebes 5 kann auch mittels Riemen, Keil- oder Zahnriemen, Ketten, Zahnstangen oder ähnlichen Maschinenelementen übertragen werden und so eine Rotationsbewegung der Achse 2 bewirken.

Das Getriebe 5 kann auch an der Stirnseite 8 befestigt sein. Die Linearbewegung der Achse 2 wird durch bestimmte Führungsvarianten, wie Längsnuten in der Achse 2 und in dem verbindenden Element des Getriebes 5, und dergleichen, ermöglicht.

Das Getriebe 4 ist also für die lineare Bewegung, das Getriebe 5 für die Rotationsbewegung der Achse 2 verantwortlich. Die Positionierung der Getriebe kann auch vertauscht sein.

Beim Entformen müssen die Bewegungen des beweglichen Werkzeugelementes, z.B. eines Kerns, der Form des Spritzgusswerkstücks folgen, insbesondere bei komplexen Formen, wie Hinterschnitten, Gewinden und dergleichen.

Durch die Steuerung der Achse 2 durch mindestens 2 Getriebe können die Bewegungen des beweglichen Werkzeugelementes bei der Entformung der komplexen Formteilgeometrie angepasst werden.

Sobald der Teil des Spritzgussstücks, der beispielsweise ein Gewinde aufweist, entformt ist, kann die restliche Entformung des Spritzgussstücks durch einfache Linearbewegung erfolgen.

Dadurch werden die Entformungszeiten aber auch die Entformungspräzision bei komplexen Spritzgussstücken deutlich verbessert.

Bei Verwendung verschiedener Einsätze des Spritzguss- oder Druckgusswerkzeugs für unterschiedliche Gewinde und/oder Gewindesteigungen und/oder Gewindedurchmesser und/oder Gewindelängen des Formteils können diese mit automatisch lesbaren Kennzeichnungen, Codes und/oder Mikrochips und dergleichen versehen sein. Dadurch kann die Kontrolleinheit, bzw. die Steuerung diese entsprechenden Parameter, wie Steigung, Gewindeart u. dgl. selbstständig erkennen und das Steuerungsprogramm entsprechend ändern oder das passende Programm aufrufen. Ebenso kann die Ausdrehgeschwindigkeit je nach Material angepasst werden.

Die automatische Erkennung der Einsätze ermöglicht daher die automatische Anpassung des Programmablaufs an das zu fertigende Formteil.

Für die Absicherung der Bewegungseinheit sowie des gesamten Spritzguss-oder Druckgusswerkzeugs gegen nicht korrekte Bewegungen sowie nicht korrekte Abläufe können die Achse und/oder weitere Elemente der Einheit sowie des Spritzgusswerkzeuges mit zusätzlicher Sensorik ausgestattet sein, wie z.B. Kraft-, Dehnungs-, Druck-, Weg-, Zeitaufnehmer und dergleichen.

Je nach zu fertigendem Spritz- oder Druckgussteil können am Spritzguss- oder Druckgusswerkzeug mehrere Bewegungseinheiten vorgesehen sein, die jeweils die Entformung eines Teils des Spritzgussteils bewirken.

## Patentansprüche

1. Bewegungseinheit für Spritzguss- oder Druckgusswerkzeuge, insbesondere geeignet zum Entformen von komplexen Bereichen von Spritz- oder Druckgussteilen, **dadurch gekennzeichnet, dass** der Antrieb der Bewegungseinheit durch zwei oder mehrere elektrische Motoren erfolgt, wobei sowohl Anfahrmoment als auch Anfahrtsgeschwindigkeit und Rotations- sowie Linearbewegungen getrennt steuerbar sind.

2. Bewegungseinheit nach Anspruch 1, **dadurch gekennzeichnet, dass** der Antrieb der Bewegungseinheit durch zwei oder mehrere elektrische Motoren erfolgt, die Getriebe antreiben, die eine lineare Bewegung und eine Rotationsbewegung einer Achse 2 bewirken.

3. Bewegungseinheit nach Anspruch 1 oder 2, **dadurch gekennzeichnet, dass** als Motoren AC-Servoantriebe eingesetzt werden.

4. Bewegungseinheit nach einem der Ansprüche 1 bis 3, **dadurch gekennzeichnet, dass** die lineare Bewegung und die Rotationsbewegung getrennt oder gleichzeitig gesteuert werden.

5. Bewegungseinheit nach einem der Ansprüche 1 bis 4, **dadurch gekennzeichnet, dass** die Achse 2 hohl ausgeführt ist.

6. Bewegungseinheit nach einem der Ansprüche 1 bis 5, **dadurch gekennzeichnet, dass** die Achse 2 ein- oder mehrteilig ausgeführt ist.

7. Bewegungseinheit nach einem der Ansprüche 1 bis 6, **dadurch gekennzeichnet, dass** die Einsätze des Spritzguss- oder Druckgusswerkzeugs mit automatisch lesbaren Kennzeichnungen, Codes und/oder Mikrochips und dergleichen versehen sind, wodurch die Steuerung des Entformungsvorgangs automatisch angepasst werden kann.

8. Bewegungseinheit nach einem der Ansprüche 1 bis 7, **dadurch gekennzeichnet, dass** die Achse oder weitere Elemente oder Teile des Spritzguss- oder Druckgusswerkzeugs mit einer Sensorik wie z.B. Kraft-, Dehnungs-, Druck-, Weg-, Zeitaufnehmer ausgestattet sind um die Antriebseinheit und das Spritzguss- oder Druckgusswerkzeug gegen falsche Bewegungen sowie falsche Abläufe zu sichern.

9. Bewegungseinheit nach einem der Ansprüche 1 bis 8, **dadurch gekennzeichnet, dass** mehrere Bewegungseinheiten am Spritzguss-oder Druckgusswerkzeug vorgesehen sind.
